# EUROPEAN PATENT APPLICATION

(11) **EP 0 764 493 A1**
(43) Date of publication of application: **26.03.1997**
(21) Application number: 96115049.7
(22) Date of filing: 19.09.1996
(51) Int. Cl.: B23K 1/00, B23K 1/002, B23K 3/047

(54) **Induction welding method and system for forming a fluidtight joint between metal pipes**

(30) Priority: 20.09.1995 IT BO950440; 14.05.1996 IT BO960265; 15.07.1996 IT BO960391
(71) Applicant: I.S.C.-Industria Scambiatori Calore S.p.A., 30122 Venezia (IT)
(72) Inventor: Pascolini,Mauro, 33043 Cividale del Friuli (IT)
(74) Representative: Jorio, Paolo, Dr. Ing.

(57) **Abstract**

An induction welding method of forming a fluidtight joint (5) between metal pipes (2a)(2b) partially inserted one inside the other and defining mutually contacting surfaces (3a)(3b); the method including a first step of depositing a flux (1a) on the contacting surfaces (3a)(3b); a second step of interposing a filler material (1b) between the contacting surfaces (3a)(3b); a third step of bringing the contacting surfaces (3a)(3b) into contact with each other; and a fourth step of forming the weld by means of a time-variable magnetic field concentrated on the joint (5).

## Description

The present invention relates to an induction welding method of forming a fluidtight joint between metal pipes.

The present invention also relates to a system implementing said method.

As is known, various welding methods exist for forming a fluidtight joint between metal pipes.

Historically, the first method to be employed was flame welding, which presented several drawbacks:
- high, difficult-to-control work temperatures (when working at temperatures of around 620°C, deformation is possible when welding aluminium pipes or metal pipes connected to aluminium parts, due to aluminium presenting a melting point of 660°C);
- flame-induced oxidation;
- mechanical weakening of the joint due to hardening of the material;
- uneven temperature distribution within the joint, thus resulting in an uneven weld, in turn resulting in internal stress and impaired fluidtight sealing; and
- automation problems, particularly in the case of very large lots.

An alternative solution to overcome the above drawbacks is epoxy resin welding, whereby a layer of heat-setting epoxy resin is interposed between the contacting parts of the pipes forming the joint, and is subsequently heated to join the pipes together. This method, however, presents other disadvantages of its own. In particular, it fails to ensure effective sealing, is difficult to implement, and involves the use of high-cost equipment.

Another alternative is ultrasonic welding, whereby the joint is immersed in a bath of molten zinc-based alloy, and, while immersed, is subjected to ultrasonic waves, which provide for removing the surface impurities and so welding the contacting surfaces of the pipes forming the joint. This process, however, is poorly suited to forming fluidtight joints, due to part of the zinc-based alloy adhering to the inner walls of the pipes forming the joint, thus resulting in partial or total clogging, especially in the case of small-diameter pipes.

In an attempt to overcome the above drawbacks, induction welding is therefore used, particularly for simultaneously welding several parts of complex structures, and comprises:
- a first step in which the entire structure is coated with a layer of emulsion containing a corrosive flux and a filler material;
- a second step in which the parts of the structure to be welded are brought into contact;
- a third step in which the entire structure is placed inside a furnace and subjected to a time-variable magnetic field to heat the flux and filler material by induction; and the filler material melts to weld the contacting surfaces; and
- a fourth step in which the structure is pickled chemically to remove any residual corrosive flux.

This type of process provides for solving the technical drawbacks typically associated with other methods:
- it operates at a precisely controllable temperature of 500°C (give or take 5°C) thus enabling troublefree welding of aluminium;
- it involves no clogging of the pipes, by virtue of the filler material only being applied to the outer surface;
- it ensures fluidtight sealing of the joint;
- it involves no hardening, oxidation or internal stress of the materials;
- it involves no deformation of any parts close to the joint and connected mechanically to the pipes; and
- it is easily automatable.

On the other hand, it presents additional drawbacks, mainly of an economic nature, in that:
- coating the entire structure with a layer of flux and filler material, while feasible in the case of a large number of welds, is decidedly uneconomical when only a small number are involved;
- likewise, subjecting the entire structure to a time-variable magnetic field, while feasible in the case of a large number of welds, is decidedly uneconomical when only a small number are involved;
- the furnace in which the variable magnetic field is produced must be large enough to house the entire structure, even when welding small joints on large-size structures;
- since the whole structure is coated with flux and subjected to a variable magnetic field, i.e. the whole structure is induction heated to 500°C, structures featuring thin aluminium parts may undergo mechanical deformation due to softening of the material; and
- finish cleaning is required to remove residual flux, which is corrosive and applied to the entire structure.

To eliminate the finish cleaning step, one method proposed employs a noncorrosive flux, but requires controlled-atmosphere heating at considerable extra cost.

It is an object of the present invention to provide an induction welding method of forming fluidtight joints between metal pipes and designed to overcome the aforementioned drawbacks.

it is a further object of the present invention to provide a system implementing said method.

According to the present invention, there is provided an induction welding method of forming a fluidtight joint between metal pipes partially inserted one inside the other and defining mutually contacting surfaces; characterized by comprising the steps of: depositing a noncorrosive flux on the contacting surfaces of the pipes; interposing a filler material between the contacting surfaces; and subjecting said joint to a time-variable magnetic field, the effects of which are concentrated on said joint so as to induction heat and melt said flux and said filler material.

According to the present invention, there is also provided an induction welding system for forming a fluidtight joint between metal pipes partially inserted one inside the other and defining mutually contacting surfaces; characterized by comprising a device for generating a time-variable magnetic field concentrated on said joint.

A preferred, non-limiting embodiment of the present invention will be described by way of example with reference to the accompanying drawings, in which:
Figure 1 shows a view in perspective of a preferred embodiment of the joint and system according to the induction welding method of the present invention;
Figure 2 shows a section of Figure 1;
Figure 3 shows sections of various embodiments of pipe joints according to the method of the present invention;
Figures 4 to 8 show schematic views of various embodiments of devices for generating a variable magnetic field;
Figure 9 shows a view in perspective of a preferred embodiment of a heat exchanger formed using the induction welding method according to the present invention;
Figures 10 and 11 show schematic views of two embodiments of a detail employed in the method according to the present invention.

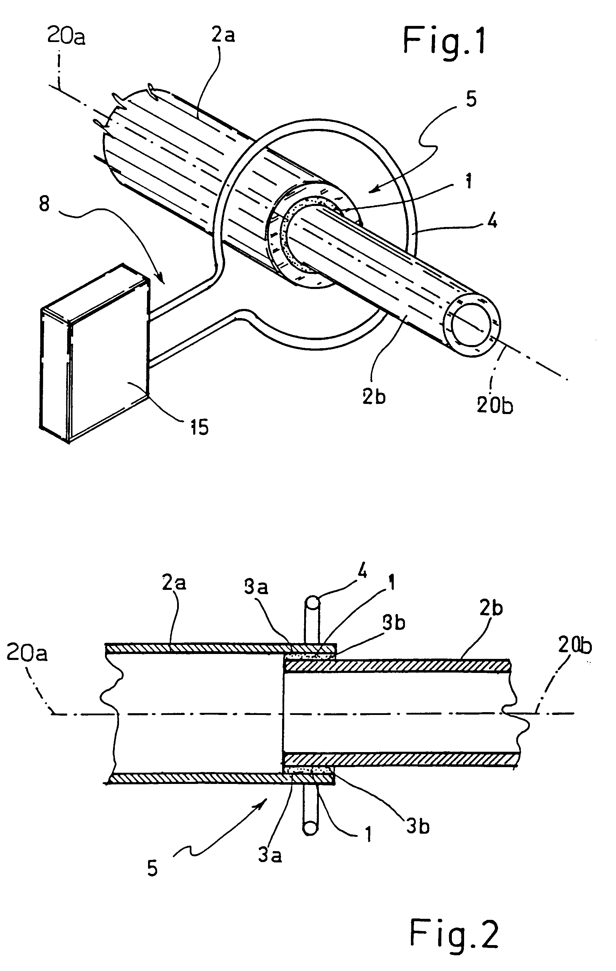

Number 5 in Figures 1 and 2 indicates a joint between two metal pipes 2a, 2b presenting respective coincident longitudinal axes 20a, 20b, and which are inserted partially and loosely one inside the other to define a contact surface 3a inside pipe 2a, and a contact surface 3b outside pipe 2b.

A noncorrosive flux 1a and a filler material 1b, both presenting a lower melting point than the metal of pipes 2, are interposed between contacting surfaces 3a and 3b of pipes 2a and 2b.

To enhance the efficiency of the deoxidizing function (described later on), however, flux 1a is interposed before filler material 1b, so that it directly contacts both contacting surfaces 3a and 3b.

Tests have shown that, for welding aluminium pipes, the best flux is cesium fluoraluminate, which melts between 410°C and 440°C, normally at 430°C, and the best filler material is zinc-aluminium alloy, which melts at about 430°C (aluminium melts at 660°C). Alternatively, aluminium silicate (AlSi12) may be used as the filler material, though this melts at about 580°C.

To enable troublefree deposition on to contacting surfaces 3, flux 1a may be of emulsion consistency, i.e. highly malleable, and substances may be added to the emulsion to adjust its density and enable smooth distribution over contact surfaces 3 of pipes 2. Tests have shown a small amount of glycol, up to a maximum of 20%, is excellent for this purpose.

Number 8 in Figures 1 and 2 indicates a device comprising a unit 15 for electrically supplying at least one loop 4 of conducting material. Unit 15 comprises a casing supporting loop 4 and housing means for generating a time-variable electric current in known manner; and loop 4 is so formed as to enclose, in use, joint 5.

As shown in Figures 1, 2, 3a, 3b, 3c, 3d, 3e, 3f, 3g, 3h, pipes 2a and 2b may be arranged geometrically in any manner and be of any design at the joint portion, providing part of one pipe is inserted loosely inside the other to define contacting surfaces 3a and 3b between which to interpose welding material 1.

Pipes 2a and 2b may be coaxial with different diameters, as shown in Figures 1 and 2 (standard joint).

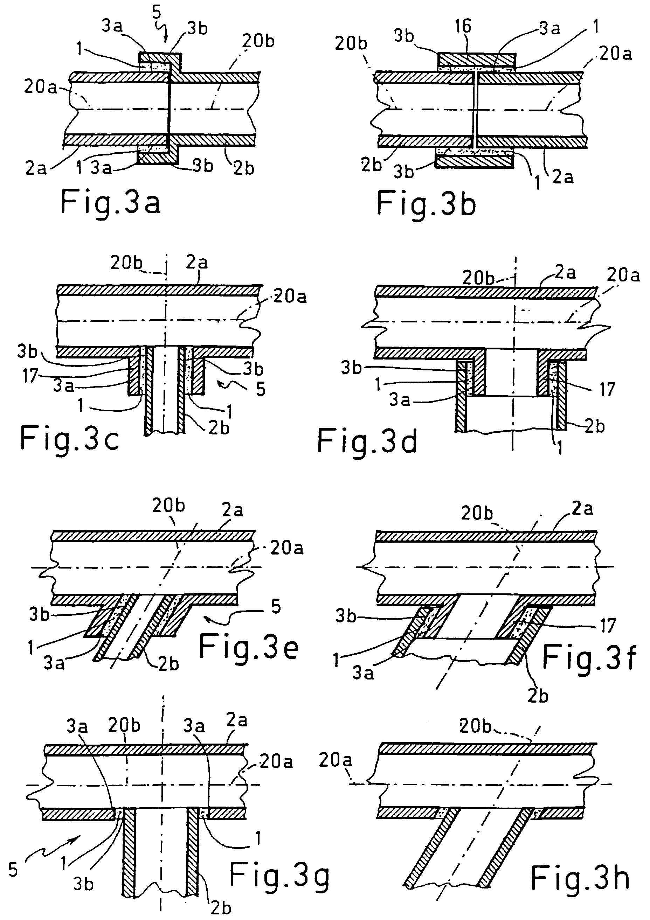

Pipes 2a and 2b may be coaxial with noncontacting portions of the same diameter, and contacting portions of different diameters, as shown in Figure 3a (butt joint).

Pipes 2a and 2b may be coaxial, of the same diameter, and only contact at the ends; insertion for defining contacting surfaces 3a and 3b being effected by a sleeve 16 coaxial with and larger in diameter than pipes 2a, 2b, as shown in Figure 3b (sleeve-enclosed butt joint).

Pipes 2a and 2b may be arranged with respective axes 20a and 20b perpendicular to each other; and pipe 2a may present a lateral inlet comprising a tubular projection 17 larger in diameter than pipe 2b, communicating hydraulically with pipe 2a, and engaging the end of pipe 2b to define contact surfaces 3a and 3b, as shown in Figure 3c (projecting T joint).

Pipes 2a and 2b may be formed and arranged as in Figure 3c, with the exception of tubular projection 17, which is smaller in diameter than tube 2b, as shown in Figure 3d (projecting T joint).

Pipes 2a and 2b may be formed and arranged as in Figure 3c, with the exception of axes 20a and 20b, which form an angle of other than 90°, as shown in Figure 3e (projecting angle joint).

Pipes 2a and 2b may be formed and arranged as in Figure 3d, with the exception of axes 20a and 20b, which form an angle of other than 90°, as shown in Figure 3f (projecting angle joint).

Pipes 2a and 2b may be arranged with respective axes 20a and 20b perpendicular to each other; and pipe 2a may present a lateral inlet comprising a hole larger in diameter than pipe 2b, communicating hydraulically with pipe 2a, and engaging the end of pipe 2b to define contacting surfaces 3a and 3b, as shown in Figure 3g (recessed T joint).

Pipes 2a and 2b may be formed and arranged as in Figure 3g, with the exception of axes 20a and 20b, which form an angle of other than 90°, as shown in Figure 3h (recessed angle joint).

The induction welding method according to the invention will be described with reference to Figures 1 and 2.

In a first step of the method, flux 1a is deposited on and only on contacting surfaces 3a, 3b of pipes 2a, 2b.

In a second step, filler material 1b is interposed between contacting surfaces 3a and 3b.

In a third step, pipes 2a and 2b are inserted partially one inside the other to bring surfaces 3a and 3b into contact with each other.

In a fourth step, joint 5 is placed inside loop 4.

And in a fifth step, loop 4 is supplied with time-variable current to subject joint 5 to a time-variable magnetic field, which heats flux 1a and filler material 1b by induction; heating is continued up to the melting point of flux 1a (about 430°C if the flux is cesium fluoraluminate); flux 1a melts and in a short time (5 to 20 seconds) removes any surface oxide from surfaces 3a, 3b of pipes 2a, 2b to enhance the mechanical strength of the weld (deoxidizing function); at the same time, the variable magnetic field continues heating filler material 1b until it melts completely (at about 430°C for zinc-aluminium alloy) at a temperature, as stated, lower than the melting point of the metal of pipes 2a, 2b (about 660°C for aluminium); the melting of filler material 1b welds contacting surfaces 3a, 3b of pipes 2a, 2b; after a predetermined time, the variable magnetic field is cut off; and joint 5 is cooled to allow the molten filler material 1b to set and impart to joint 5 the desired mechanical and fluid sealing characteristics.

Despite presenting the same melting point, the characteristics of flux 1a and filler material 1b are such that the flux melts before the filler material. This is achieved by appropriately varying the specific and latent heat, i.e. the amount of heat to be absorbed, for the two materials to melt, and the capacity of the two material to be heated by a variable magnetic field, i.e. the amount of heat absorbed for a given stress.

The length of time the variable magnetic field is applied depends in general on the characteristics of flux 1a, filler material 1b and the metal of which pipes 2 are made, on the size of joint 5 (i.e. the amount of welding material 1 used) and on the intensity and frequency of the variable magnetic field. The reason for this lies in the magnetic field having to supply flux 1a and filler material 1b with enough heat for them to melt completely, and, what is more, within a specific length of time. If heating is performed too quickly, flux 1a is not allowed enough time to remove the surface oxide; whereas, if performed too slowly, filler material 1b may melt off joint 5 by force of gravity.

Tests have shown that, when welding aluminium pipes 2 using a flux 1a of cesium fluoride and a filler material 1b of zinc-aluminium alloy, the best frequency in terms of speed and weld quality is from 10 to 150 KHz, with an optimum value of about 100 KHz.

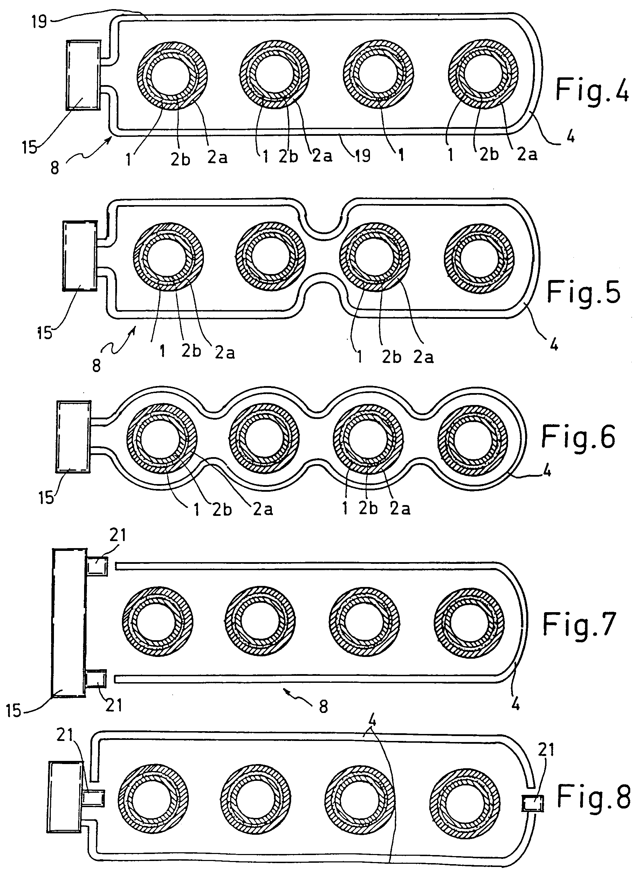

With reference to Figure 4, a number of joints 5 of pipes 2a, 2b may be welded simultaneously using a device 8 presenting an elongated loop 4 with substantially straight longer sides 19.

With reference to Figure 5, a number of joints 5 of pipes 2a, 2b may be welded simultaneously using a device 8 presenting an elongated loop 4 with roughly sinusoidal longer sides 19 surrounding groups of joints 5.

With reference to Figure 6, a number of joints 5 of pipes 2a, 2b may be welded simultaneously using a device 8 presenting an elongated loop 4 with roughly sinusoidal longer sides 19 surrounding each joint 5.

Adapting the shape of loop 4 more closely to the geometrical arrangement of joints 5, as shown in Figures 4, 5 and 6, provides for concentrating the magnetic flux generated by loop 4 more closely on joints 5 and so reducing flux dispersion and overall electricity consumption. On the other hand, it involves a certain limitation in the scope of device 8, which may only be used for welding joints 5 with one particular geometrical arrangement.

With reference to Figures 1, 2, 4, 5 and 6, device 8 may be formed with loop 4 fixed permanently to unit 15, in which case, loop 4 is moved along pipes 2a, 2b to and from the work position surrounding joint 5.

With reference to Figure 7, device 8 may be formed with loop 4 fitted to unit 15 by means of connecting joints 21 integral with the unit, so that a short side of loop 4 is open when it is withdrawn from joints 21, and loop 4 is inserted and withdrawn laterally in relation to pipes 2a, 2b into and from the work position surrounding joint 5.

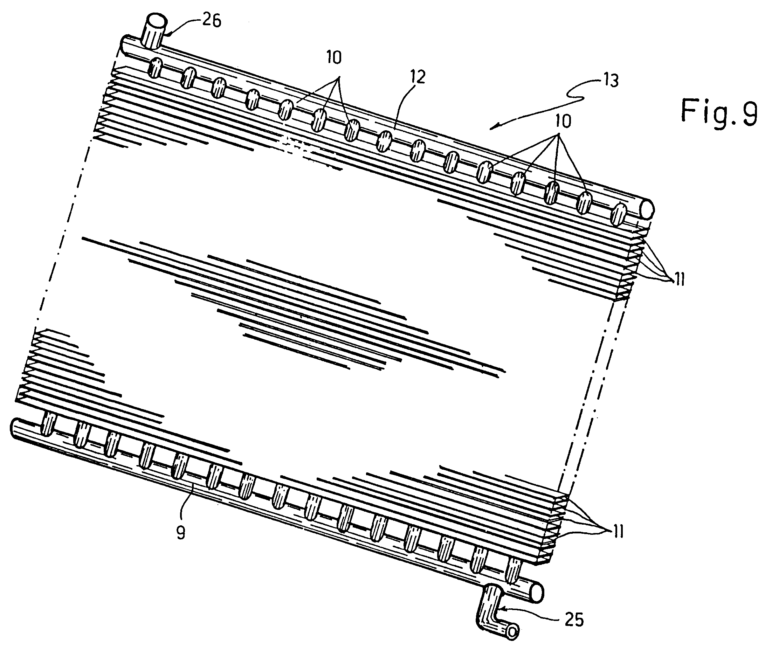

With reference to Figure 8, device 8 may be formed with loop 4 comprising two parts, at least one of which is movable in relation to unit 15 by means of connecting joints 21, and the two parts of loop 4 are connected and disconnected to set and dismantle loop 4 into and from the work position surrounding joint 5.

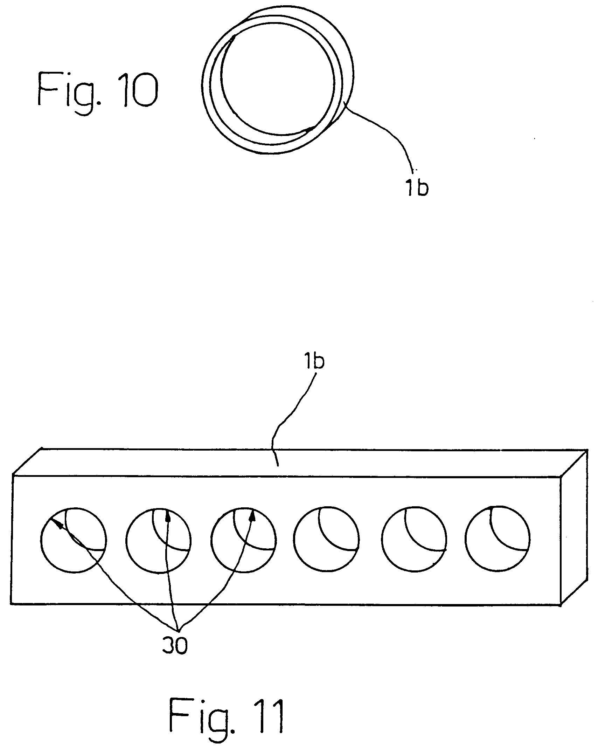

With reference to Figure 10, filler material 1b may be defined by an annular body of appropriate size, to enable fast, troublefree insertion, with no deformation, between contacting surfaces 3a, 3b of pipes 2a, 2b.

With reference to Figure 11, to simultaneously weld a number of joints 5 between a corresponding number of pairs of pipes 2a, 2b, filler material 1b may be in the form of a single body presenting a number of holes 30, to enable simultaneous insertion, with substantially no deformation, between a corresponding number of pairs of contacting surfaces 3.

These solutions provide for fast, troublefree insertion, as well as for ensuring insertion of the optimum quantity of filler material 1b between contacting surfaces 3.

in addition to those typically associated with contact induction welding, the method according to the present invention also presents numerous other advantages:
- no need for a controlled atmosphere;
- considerable saving in welding material, by virtue of the welding material containing the flux and filler material only being deposited between the surfaces of the joint to be welded;
- localized welding enabling troublefree welding of small joints on large-size structures;
- since only the joints to be welded, as opposed to the whole structure, are deposited with flux and subjected to the magnetic field, the structural parts involving no joints may be kept at low temperature, at any rate well below the softening point of the material of which the structure is made (especially in the case of aluminium structures), thus eliminating any mechanical deformation of the structure during the welding process;
- since the flux, which is noncorrosive, is only deposited between the contacting surfaces of the joint, no finish cleaning of the structure is required; and
- the fact that only the joint to be welded is subjected to the variable magnetic field greatly reduces both the initial and running cost of the magnetic field generating system, particularly in the case of complex structures with a small number of welds.

With reference to Figure 9, the induction welding method and system according to the present invention are ideally suited for producing an aluminium heat exchanger 13 comprising an inlet header 9 and an outlet header 12 parallel to each other and each presenting on one side a number of aligned, equally spaced holes. Each header 9, 12 presents a closed end, and an open end to which is welded a threaded joint 25, 26; and a number of pipes 10 are welded inside the holes in headers 9 and 12, and are fitted with a pack of flat fins 11 by mechanically expanding pipes 10 inside aligned holes (not shown) formed in flat fins 11.

The induction welding method according to the present invention is used to weld pipes 10 to headers 9 and 12, after first fitting pipes 10 to the pack of flat fins 11.

The induction welding method according to the present invention is also used to weld threaded joints 25 and 26 to the respective open ends of headers 9 and 12.

The method according to the invention is particularly advantageous in that:
- being made of aluminium, the heat exchanger requires a controlled welding temperature;
- on account of the very small section and, hence, easily deformable nature of the flat fins, heating must be localized as far as possible on the joint;
- only a small number of welds are required for each exchanger; and
- the welds are limited to two small portions of the exchanges.

Clearly, changes may be made to the method, system, joints and heat exchanger as described and illustrated herein without, however, departing from the scope of the present invention.

In particular, device 8 may comprise a number of coaxial loops 4 for generating a stronger magnetic flux for a given current.

## Claims

1. An induction welding method of forming at least one fluidtight joint (5) between at least two metal pipes (2a)(2b) partially inserted one inside the other and defining mutually contacting surfaces (3a)(3b); characterized by comprising the steps of: depositing a noncorrosive flux (1a) on the contacting surfaces (3a)(3b) of the pipes (2a)(2b); interposing a filler material (1b) between the contacting surfaces (3a)(3b); and subjecting said joint (5) to a time-variable magnetic field, the effects of which are concentrated on said joint (5) so as to induction heat and melt said flux (1a) and said filler material (1b).

2. A method as claimed in Claim 1, characterized in that said step of subjecting said joint (5) to said magnetic field comprises two substeps; a first of said two substeps comprising heating the flux to a temperature above its own melting point and below the melting point of the metal from which said pipes (2a)(2b) are made, so that the molten flux provides for deoxidizing said contacting surfaces (3a)(3b); and a second of said two substeps comprising heating the filler material (1b) to a temperature above its own melting point and below the melting point of the metal from which said pipes (2a)(2b) are made, so as to melt the filler material.

3. A method as claimed in any one of the foregoing Claims, characterized in that said flux is in the form of emulsion.

4. A method as claimed in Claim 3, characterized in that a quantity of fluidifying material is added to said emulsion (1) to reduce its density.

5. A method ad claimed in Claim 4, characterized in that said fluidifying material is defined by glycol.

6. A method as claimed in Claim 5, characterized in that the quantity of glycol present in said emulsion ranges between 1% and 20%.

7. A method as claimed in any one of the foregoing Claims, characterized in that said filler material (1b) is defined by an annular body.

8. A method as claimed in Claim 7, characterized in that said annular body is in the form of a ring of such a size as to be interposed, with substantially no deformation, between the contacting surfaces (3a)(3b) of the pipes (2a)(2b).

9. A method as claimed in any one of the foregoing Claims from 1 to 6, for simultaneously forming a number of joints (5) between a corresponding number of pairs of pipes (2a)(2b), characterized in that said filler material (1b) is defined by a single body presenting a number of holes (30) and which is interposed simultaneously, and with substantially no deformation, between a number of pairs of contacting surfaces (3a)(3b).

10. A method as claimed in any one of the foregoing Claims, characterized in that said pipes (2a)(2b) are made of aluminium.

11. A method as claimed in any one of the foregoing Claims, characterized in that said flux is defined by cesium fluoraluminate.

12. A method as claimed in any one of the foregoing Claims, characterized in that said filler material is defined by a zinc-aluminium alloy.

13. A method as claimed in any one of the foregoing Claims from 1 to 11, characterized in that said filler material is defined by aluminium silicate (AlSi12).

14. A method as claimed in any one of the foregoing Claims, characterized in that said time-variable magnetic field presents a variation frequency of 10 to 150 KHz.

15. A method as claimed in any one of the foregoing Claims, characterized in that said time-variable magnetic field presents a variation frequency of 80 to 120 KHz.

16. A method as claimed in any one of the foregoing Claims, characterized in that said time-variable magnetic field presents a variation frequency of 100 KHz.

17. An induction welding system for forming a fluidtight joint (5) between metal pipes (2a)(2b) partially inserted one inside the other and defining mutually contacting surfaces (3a)(3b); characterized by comprising a device (8) for generating a time-variable magnetic field concentrated on said joint (5).

18. A system as claimed in Claim 17, characterized in that said device (8) comprises a unit (15) for generating a time-variable electric current; and at least one loop (4) supplied electrically by said unit (15); said loop (4) being separable from said unit (15).

19. A system as claimed in Claim 17, characterized in that said device (8) comprises a unit (15) for generating a time-variable electric current; and at least one loop (4) supplied electrically by said unit (15); said loop (4) comprising two parts, at least one of which is detachable from said unit (15).

20. A heat exchanger (13) made of aluminium and comprising an inlet header (9), an outlet header (12), a number of pipes (10), and a pack of fins (11);
each said header (9)(12) presenting on one side a number of aligned holes;
said fins (11) presenting a number of aligned holes and being fitted to said pipes (10) by mechanical expansion; and
said pipes (10) inserted inside said holes in said headers (9)(12) defining mutually contacting surfaces;
characterized in that the welds between the headers (9)(12) and the pipes (10) are made according to the method claimed in Claims 1-16.
